# EUROPÄISCHE PATENTANMELDUNG

(11) **EP 2 481 950 A1**
(43) Veröffentlichungstag der Anmeldung: **01.08.2012**
(21) Anmeldenummer: 12000585.5
(22) Anmeldetag: 30.01.2012
(51) Int. Cl.: F16H 3/54, F02B 57/04

(54) **Kraftfahrzeug mit Riementrieb und Planetengetriebe Zwischen Verbrennungskraftmaschine und elektrischer Maschine**

(30) Priorität: 01.02.2011 DE 102011010091
(71) Anmelder: Audi AG, 85045 Ingolstadt (DE); Miba Sinter Austria GmbH, 4663 Laakirchen (AT)
(72) Erfinder: Gebhard, Bastian, 80797 München (DE); Dumanski, Christian, 4040 Plesching-Steyregg (AT)

(57) **Zusammenfassung**

In einem Kraftfahrzeug sind eine Verbrennungskraftmaschine und eine elektrische Maschine über einen Riementrieb mit einer Riemenscheibe (20) und über ein Planetengetriebe miteinander gekoppelt. Die Riemenscheibe (20) ist mit einem drehbaren Element, z. B. dem Sonnenrad (16) des Planetengetriebes verbunden. Ein zweites drehbares Element, z. B. das Hohlrad (24), ist mit einer Bremsscheibe (30) verbunden, wobei Kennzeichen der Anordnung ist, dass sich die Bremsscheibe (30) radial weiter nach außen erstreckt als die Riemenscheibe (22), sodass die eigentliche Bremse (zwei Bremselemente (26) mit Sattelträger (32) und Bremsbacken (34)) außerhalb der Riemenscheibe (30) anordenbar ist. Dadurch lässt sich das Planetengetriebe mit der Riemenscheibe kompakt bauen.

## Beschreibung

Die Erfindung betrifft ein Kraftfahrzeug nach dem Oberbegriff des Patentanspruchs 1, wie es aus der DE 198 22 426 C2 bekannt ist.

In der DE 198 22 426 C2 ist eine Antriebsvorrichtung für Nebenaggregate einer Hubkolbenbrennkraftmaschine beschrieben. Mit einer Kurbelwelle der Hubkolbenbrennkraftmaschine ist ein Planetenträger eines Planetengetriebes verbunden. Mit dem Sonnenrad des selben Planetengetriebes ist gleichzeitig eine Riemenscheibe verbunden, die Teil eines Riementriebs ist, der die Hubkolbenbrennkraftmaschine mit Nebenaggregaten koppelt. Nebenaggregate sind z. B. die Lichtmaschine, also eine elektrische Maschine, oder ein Klimakompressor.

Das Hohlrad des Planetengetriebes kann frei umlaufen, ist aber gleichzeitig mittels einer Bremsvorrichtung feststellbar. Die Bremsvorrichtung ist eine Art Scheibenbremse, wobei die Scheibe in das Hohlrad an seiner äußeren Umfangsfläche nach Art eines radialen Flansches integriert ist. Die Bremsscheibe befindet sich jedoch innerhalb des Getriebes, an einer axialen Position zwischen Kurbelwelle und Riemenscheibe, und an dieser axialen Position befinden sich auch die Bremsbacken zum Bremsen des Hohlrades.

Nachteilig an dieser Anordnung ist es, dass die Bremsscheibe und die Bremsbacken in deutlichem Abstand neben der Riemenscheibe positioniert sind und damit die gesamte Anordnung mit dem Planetengetriebe in axialer Richtung relativ groß bauen muss.

Es ist Aufgabe der Erfindung, diesen Nachteil zu beseitigen, also einen Weg aufzuzeigen, wie die Anordnung aus Planetengetriebe und Riemenscheibe relativ kompakt gebaut werden kann.

Die Aufgabe wird durch ein Kraftfahrzeug mit den Merkmalen gemäß Patentanspruch 1 gelöst.

Erfindungsgemäß erstreckt sich die Bremsscheibe weiter radial nach außen (bezogen auf die Drehachse der drehbaren Elemente Sonnenrad, Planetenträger und Hohlrad des Planetengetriebes) als die Riemenscheibe. Auf diese Weise können die Bremsbacken außerhalb der Anordnung angeordnet sein, es muss daher nicht innerhalb der Riemenscheibe Platz für die Bremsbacken bereitgestellt sein.

Bevorzugt ist wie bei der DE 198 22 426 C2 ein Hohlrad des Planetengetriebes mit der Bremsscheibe verbunden. Diese Ausführungsform ist besonders einfach baubar, weil das Hohlrad das radial äußerste Element des Planetengetriebes ist und daher an das Hohlrad, ebenfalls nach Art eines radialen Flansches, die Bremsscheibe (als Ringscheibe) integriert werden kann.

Darüber hinaus ist bei dieser Ausführungsform bevorzugt vorgesehen, dass ein Planetenträger (Planetensteg) des Planetengetriebes mit einer Kurbelwelle der Verbrennungskraftmaschine gekoppelt ist und ein Sonnenrad des Planetengetriebes mit der Riemenscheibe verbunden ist, und wobei zudem das Sonnenrad und der Planetenträger über einen Freilauf miteinander gekoppelt oder eine Kupplung miteinander koppelbar sind. Bei dieser Ausführungsform lässt sich besonders einfach über das Planetengetriebe und den Riementrieb die Verbrennungskraftmaschine mit der elektrischen Maschine derart koppeln, dass dennoch die Drehzahlen nicht immer ein vorbestimmtes Verhältnis haben müssen. Insbesondere kann die elektrische Maschine bevorzugt die Verbrennungskraftmaschine überholen, somit kann also der Rotor der elektrischen Maschine mit einer größeren Drehzahl drehen als die Drehzahl der Kurbelwelle multipliziert mit der Übersetzung von Riementrieb Planetengetriebe.

Bei einer bevorzugten Ausführungsform der Erfindung ist die Bremsscheibe von einem bezüglich der Verbrennungskraftmaschine des Kraftfahrzeugs festen Bremselement bremsbar, wobei insbesondere ein Sattelträger karosseriefest sein kann und sich die Bremsbacken in dem Sattelträger bewegen können. Durch das verbrennungskraftmaschinenfeste Bremselement lässt sich das Hohlrad besonders gut gegenüber den weiteren Elementen des Planetengetriebes festhalten.

Dies gilt in um so höherem Maße, wenn die Scheibenbremse zwei Bremselemente aufweist, die zueinander um einen Winkel von zwischen 135° und 225°, bevorzugt von zwischen 175° und 185° (bezüglich der Drehachse der Elemente des Planetengetriebes) zueinander versetzt sind. Die Positionen der beiden Bremsen sind vorteilhaft zur Erfüllung einer Forderung, den Riemenlauf in axial ähnlicher Position zum Riemen nicht zu stören und beim gleichzeitigen Betätigen keine nennenswerte Radialkräfte in die Lagerungen einzuleiten. Weiterhin unterbinden sie bei dabei Taumelbewegungen der Bremsscheibe.

Die Scheibenbremse kann elektromechanisch, elektrohydraulisch, elektromagnetisch, hydraulisch oder mechanisch ansteuerbar sein oder in Mischformen dieser Ansteuerungsarten ansteuerbar sein. Es lassen sich somit als Bremselemente derartige Elemente auswählen, die besonders gut für das Feststellen des Hohlrads geeignet sind und/oder kostengünstig und/oder platzsparend sind, wohingegen es bei der DE 198 22 426 C2 einer ganz bestimmten Ausgestaltung der Bremsvorrichtung bedarf, um sie radial innerhalb der Riemenscheibe anordnen zu können.

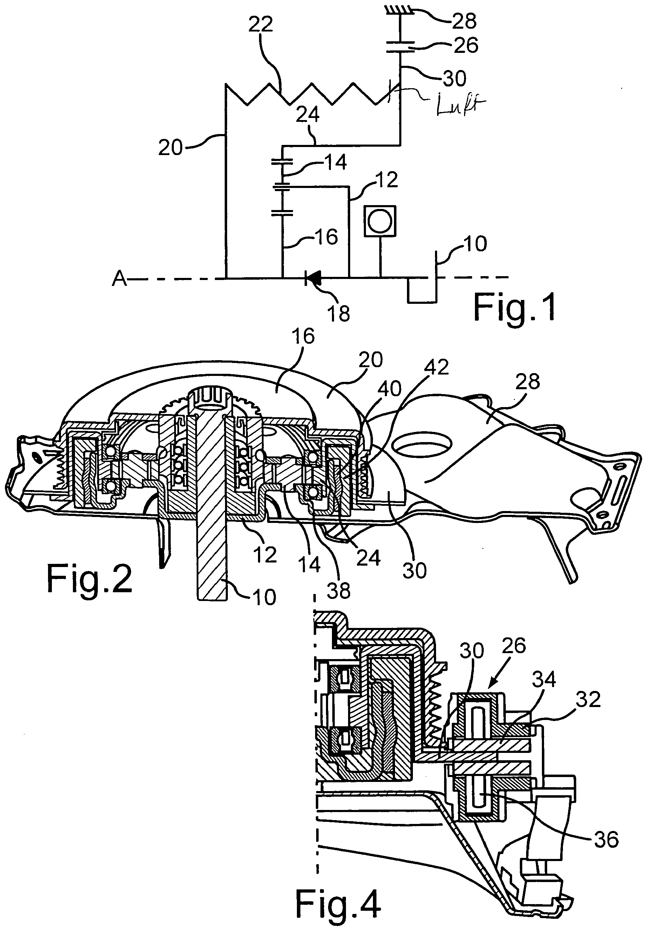

Nachfolgend wird eine bevorzugte Ausführungsform der Erfindung unter Bezug auf die Zeichnung beschrieben, in der
- Fig. 1: eine in einem erfindungsgemäßen Kraftfahrzeug verwirklichte Anordnung schematisch veranschaulicht und
- Fig. 2: die Anordnung aus Fig. 1 im radialen Schnitt zeigt,

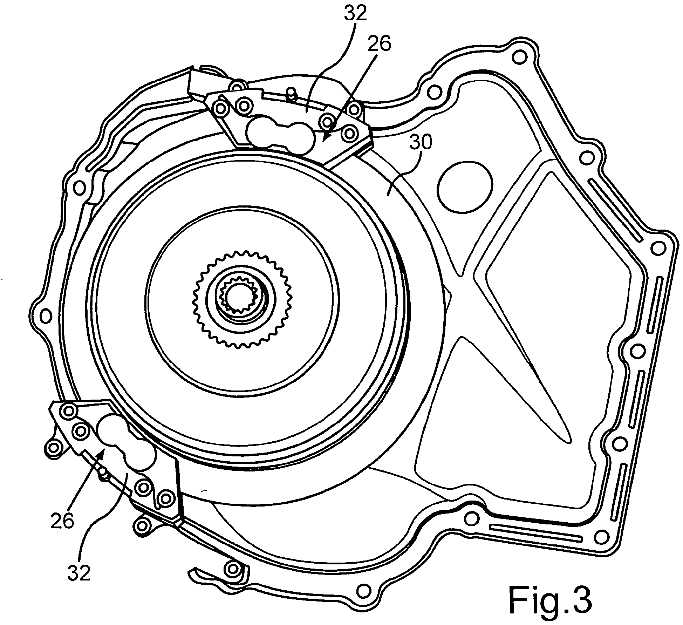

- Fig. 3: eine perspektivische Ansicht auf die Anordnung mit Bremssätteln an einem Bauteil der Verbrennungskraftmaschine ist, und
- Fig. 4: die Anordnung mit den Bremssätteln aus Fig. 3 ausschnittsweise im radialen Schnitt zeigt.

Eine Kurbelwelle 10 einer Verbrennungskraftmaschine ist mit einem Planetenträger 12 eines Planetengetriebes gekoppelt, der mehrere Planeten 14 miteinander verbindet. Die Planeten 14 wälzen auf einem Sonnenrad 16, das mit einer Riemenscheibe 20 verbunden ist, die radial außen eine Profilierung 22 aufweist, in die ein Riemen eines Riemengetriebes eingreifen kann. Über das Riemengetriebe kann eine elektrische Maschine, z. B. zum Starten der Verbrennungskraftmaschine mit der Kurbelwelle 10, angekoppelt werden. Die elektrische Maschine kann umgekehrt auch als Generator arbeiten. Ein Hohlrad 24 des Planetengetriebes ist mit Hilfe einer Bremse an einem Karosseriebauteil 28 des Kraftfahrzeugs feststellbar, wobei die Bremse bezüglich einer Drehachse A der Elemente des Planetengetriebes (Sonnenrad 16, Planetenträger 12, Hohlrad 24) radial weiter außen als die Riemenscheibe 20 angreift. Es handelt sich bei der Bremse vorliegend um eine Scheibenbremse: Das Hohlrad 24 ist insbesondere mit einer ringförmigen Scheibe 30 verbunden, und die Bremse umfasst ferner Bremselemente 26 mit einem Sattelträger 32, in dem Bremsbacken 34 gelagert sind, die von Aktoren 36 gegen die Bremsscheibe 30 drückbar sind. Die Scheibenbremse umfasst zugleich zwei Bremselemente 26, die bezüglich der Drehachse A um 160°, also ca. 180° zueinander versetzt sind. Werden sie gleichzeitig angesteuert, wird wirkungsvoll eine Taumelbewegung der Bremsscheibe 30 und damit des Hohlrades 24 unterbunden.

Die Anordnung umfasst ferner einen mit dem Planetenträger 12 gekoppelten Tilgerträger 38 aus Blech, an den über einen Gummiring 40 ein Stahlring 42 angekoppelt ist, der Schwingungen der Kurbelwelle 10 aufnimmt und tilgt.

## Patentansprüche

1. Kraftfahrzeug mit einer Verbrennungskraftmaschine und einer elektrischen Maschine, die über einen Riementrieb und ein Planetengetriebe miteinander gekoppelt sind, wobei eine Riemenscheibe (20) des Riementriebs mit einem ersten um eine Drehachse drehbaren Element (16) des Planetengetriebes verbunden ist und ein zweites um die selbe Drehachse drehbares Element (24) mit einer Bremsscheibe (30) verbunden ist, die Teil einer Scheibenbremse an der Verbrennungskraftmaschine des Kraftfahrzeugs ist,
**dadurch gekennzeichnet, dass**
sich die Bremsscheibe (30) weiter radial nach außen erstreckt als die Riemenscheibe (20).

2. Kraftfahrzeug nach Anspruch 1, **dadurch gekennzeichnet, dass** ein Hohlrad (24) des Planetengetriebes mit der Bremsscheibe (30) verbunden ist.

3. Kraftfahrzeug nach Anspruch 2, **dadurch gekennzeichnet, dass** ein Planetenträger (12) des Planetengetriebes mit einer Kurbelwelle (10) der Verbrennungskraftmaschine gekoppelt ist und ein Sonnenrad (16) des Planetengetriebes mit der Riemenscheibe (20) verbunden ist, wobei das Sonnenrad (16) und der Planetenträger (12) über einen Freilauf (18) miteinander gekoppelt sind oder über eine Kupplung miteinander koppelbar sind.

4. Kraftfahrzeug nach einem der vorhergehenden Ansprüche, **dadurch gekennzeichnet, dass** die Bremsscheibe (30) von einem bezüglich der Verbrennungskraftmaschine des Kraftfahrzeugs festen Bremselement (26) bremsbar ist.

5. Kraftfahrzeug nach Anspruch 4, **dadurch gekennzeichnet, dass** die Scheibenbremse zwei bezüglich der Drehachse (A) des drehbaren Elements um zwischen 135° und 225°, bevorzugt um zwischen 175° und 185° zueinander versetzte Bremselemente (26) aufweist.

6. Kraftfahrzeug nach einem der vorhergehenden Ansprüche, **dadurch gekennzeichnet, dass** die Scheibenbremse elektromechanisch
und/oder elektrohydraulisch und/oder elektromagnetisch und/oder hydraulisch und/oder mechanisch ansteuerbar ist.
